# EUROPÄISCHE PATENTSCHRIFT

(11) **EP 2 441 601 B1**
(45) Veröffentlichungstag und Bekanntmachung des Hinweises auf die Patenterteilung: **24.04.2013**
(21) Anmeldenummer: 10013662.1
(22) Anmeldetag: 14.10.2010
(51) Int. Cl.: B60D 5/00, B61D 17/20

(54) **Drehscheibe eines Übergangs zwischen zwei gelenkig miteinander verbundenen Fahrzeugteilen**
Turntable for the intersection of two vehicles with a jointed connection
Disque rotatif d'un passage entre deux éléments de véhicules reliés de manière articulée

(43) Veröffentlichungstag der Anmeldung: 18.04.2012
(73) Patentinhaber: Hübner GmbH, 34123 Kassel (DE)
(72) Erfinder: Rudolph, Hans-Jakob, 34308 Bad Emstal (DE)
(74) Vertreter: Walther, Walther & Hinz GbR

(56) Entgegenhaltungen:
- AT-U1- 9 330
- DE-A1- 4 138 921
- DE-A1- 4 329 674
- DE-C- 947 078
- DE-U1-202006 007 377
- US-A- 1 727 642
- US-A- 2 216 547

## Beschreibung

Die Erfindung betrifft eine Drehscheibe eines Übergangs zwischen zwei gelenkig miteinander verbundenen Fahrzeugteilen, wobei die Drehscheibe zu beiden Enden mit dem Boden des jeweiligen Fahrzeugteils in Verbindung steht, wobei mindestens ein Teil der Drehscheibe lösbar mit dem Boden des Fahrzeugteils in Verbindung steht.

Die Erfindung umfasst hierbei sowohl die Fahrzeugteile von Schienenfahrzeugen, z. B. Straßenbahnen, U-Bahnen usw., als auch von z. B. Gelenkbussen. Die gelenkige Verbindung zwischen den Fahrzeugteilen umfasst sowohl Gelenke als auch Kupplungen.

Übergänge mit Drehscheibe als Brücke werden üblicherweise in Gelenkbussen und Schienenfahrzeugen eingesetzt. Die als Brücke fungierende Drehscheibe überspannt hierbei die gelenkige Verbindung zwischen den beiden Fahrzeugteilen, wobei darüber hinaus Teil des Übergangs ebenfalls der Balg ist, der sowohl die Drehscheibe als Brücke des Übergangs als auch das Gelenk zwischen den beiden Fahrzeugteilen tunnelförmig umgibt.

Die Drehscheibe selbst ist auf der einen Seite durch eine Kuppelplatte mit dem Boden des einen Fahrzeugs oder Fahrzeugteils verbunden. Auf der anderen Seite, also auf der kreisbogenförmig gebogenen Seite, liegt die Drehscheibe in einem Absatz des Bodens des Fahrzeugteils auf, sodass sich ein bodengleicher Übergang ergibt. Auf der Unterseite der Drehscheibe ist ein Führungsglied vorgesehen, das mit einem entsprechenden Gegenstück an der Unterseite des Fahrzeugbodens zusammenwirkt und ein Abheben der Drehscheibe verhindert. Im Bereich der Anbindung der Kuppelplatte an dem Boden des einen Fahrzeugs ist z. B. ein Scharnier vorgesehen, sodass Nickbewegungen zwischen den beiden Fahrzeugteilen ermöglicht werden. Die Kuppelplatte selbst ist am Fahrzeugboden verschraubt (DE 20 2006 007 377 U1).

Es wurde bereits an anderer Stelle darauf hingewiesen, dass der Balg sowohl die als Brücke dienende Drehscheibe als auch das Gelenk zwischen den beiden Fahrzeugteilen tunnelförmig umgibt. Das heißt, um zu Wartungszwecken das Gelenk zugänglich zu machen, ist entweder erforderlich den Balg zu öffnen oder aber die Verschraubung der Kuppelplatte mit der Drehscheibe zu lösen. Es hat sich nunmehr herausgestellt, dass insbesondere zu Reinigungszwecken der Raum unterhalb der Drehscheibe häufiger geöffnet werden muss. Das Lösen eines Balges, um diesen Raum zugänglich zu machen, ist wesentlich zu aufwendig. Allerdings ist auch das Abschrauben der Drehscheibe mit einem verhältnismäßig großen Aufwand verbunden.

Die der Erfindung zugrunde liegende Aufgabe besteht demzufolge darin, auf einfache Weise den Raum unterhalb der Drehscheibe zu Reinigungsarbeiten zugänglich zu machen.

Zur Lösung der Aufgabe wird erfindungsgemäß bei einer Drehscheibe eines Übergangs der eingangs genannten Art vorgeschlagen, dass zur lösbaren Verbindung mindestens eines Teils der Drehscheibe mit dem Boden eines Fahrzeugteils eine Riegeleinrichtung vorgesehen ist.

Hieraus wird deutlich, dass durch Lösen der Riegeleinrichtung der mindestens eine Teil der Drehscheibe oder aber auch die Drehscheibe komplett abgenommen werden kann. In diesem Zusammenhang ist darauf hinzuweisen, dass die Drehscheibe, die in der Draufsicht in etwa halbkreisförmig ausgebildet ist, in zwei etwa gleich große Teile, nämlich Viertelteile, unterteilt ist. Insofern ist insbesondere vorgesehen, dass jeder Teil der Drehscheibe durch jeweils eine Riegeleinrichtung mit dem Boden des jeweiligen Fahrzeugteils in Verbindung steht.

Vorteilhafte Merkmale und Ausprägungen der Erfindung sind den Unteransprüchen zu entnehmen.

So umfasst insbesondere die Riegeleinrichtung einen verschieblich gehaltenen Schubriegel, wobei der Schubriegel in Eingriff mit einem Riegelglied bringbar ist. Hieraus wird deutlich, dass dann, wenn der Schubriegel nicht in Eingriff mit dem Riegelglied steht, die Drehscheibe oder zumindest ein Teil der Drehscheibe abgenommen werden kann.

Nach einer vorteilhaften Ausführungsform ist das Riegelglied an der Drehscheibe und der Schubriegel an dem Boden angeordnet. Der Schubriegel selbst ist nach einem weiteren Merkmal der Erfindung in einem Schlosskasten geführt, wobei der Schlosskasten das Riegelglied aufnimmt. Hieraus wird deutlich, dass durch Verschieben des Schubgliedes relativ zum Schlosskasten die Drehscheibe entweder entriegelt oder mit dem Schlosskasten und damit mit dem Boden des Fahrzeugs verriegelt werden kann.

Das Riegelglied selbst weist im Einzelnen einen hakenförmigen Ansatz auf, der in dem Schlosskasten in Eingriff mit dem Schubriegel bringbar ist. Der hakenförmige Ansatz ist auf der Unterseite der Drehscheibe im Bereich des stirnseitigen Endes der Drehscheibe angebracht, das nicht kreisbogenförmig ausgebildet ist. Sowohl der Schubriegel als auch der Schlosskasten weisen jeweils ein Langloch auf, wobei das als Fenster zu bezeichnende Langloch in dem Schubriegel zur Deckung mit dem Langloch in dem Schlosskasten bringbar ist. Dann, wenn die beiden Langlöcher deckungsgleich sind, ragt bei Aufliegen der Drehscheibe auf dem Schlosskasten, der auf der Unterseite des Bodens des Fahrzeugteils befestigt ist, der hakenförmige Ansatz des Riegelgliedes in die beiden Langlöcher hinein, sodass bei Verschiebung des Schubriegels in die Öffnung des hakenförmigen Ansatzes hinein die Drehscheibe mit dem Boden verriegelt ist.

Zur Bewegung des Schubriegels ist endseitig an dem Schubriegel ein Hebel angeordnet, der an der seitlichen Stirnseite des Bodens verschwenkbar gelagert ist. Der Hebel selbst ist für Personen, die sich auf der Drehscheibe befinden, unmittelbar nicht sichtbar, da auf der Innenseite des Balges ein sogenannter Spurfugenabdeckbalg vorgesehen ist, der seitlich den Zwischenraum zwischen der Brücke und der Innenseite des Balges überdeckt.

Nach einem besonders vorteilhaften Merkmal der Erfindung ist der Schubriegel als Riegelstange ausgebildet, wobei darauf hingewiesen wird, dass auch eine Ausführungsform, beispielsweise mit einem Bowdenzug, als zur Erfindung zugehörig angesehen wird.

Es wurde bereits erwähnt, dass die Drehscheibe auf der einen Seite durch mindestens eine Kuppelplatte mit dem Boden des entsprechenden Fahrzeugteils in Verbindung steht. Bei einer solchen Ausprägung der Brücke weist die Kuppelplatte als Teil des Bodens im Bereich ihrer der Drehscheibe zugewandten Stirnseite auf ihrer Unterseite des mindestens einen Schlosskasten auf, wobei die Kuppelplatte mindestens die eine Riegelstange besitzt, die in dem mindestens einen Schlosskasten verschieblich geführt ist. Hierbei besitzen sowohl die Riegelstange als auch der Schlosskasten, wie bereits ausgeführt, mindestens ein Langloch, wobei die beiden Langlöcher im Wesentlichen zur Deckung bringbar sind, wobei die Drehscheibe auf ihrer Unterseite das Riegelglied aufweist, das nach Art eines vorstehenden Hakens ausgebildet ist, wie dies bereits beschrieben worden ist. Die Riegelstange ist im Bereich des Langlochs in Eingriff mit dem nach Art des Hakens ausgebildeten Riegelglied bringbar, wobei auf diese Weise die Drehscheibe oder zumindest ein Teil der Drehscheibe mit ihrem einen Ende durch den Schlosskasten an der Kuppelplatte fixiert ist, wobei die Kuppelplatte am Boden des einen Fahrzeugteils befestigt ist.

Anhand der Zeichnungen wird die Erfindung nachstehend beispielhaft näher erläutert.
- Fig. 1: zeigte eine Ansicht auf die Drehscheibe von unten;
- Fig. 2: zeigt eine Ausschnittsvergrößerung aus Fig. 1;
- Fig. 3: zeigt die Riegelstange mit dem Schlosskasten in einer perspektivischen Ansicht von oben;
- Fig. 4: zeigt die an der Kuppelplatte angeordnete Riegelstange ohne Schlosskasten.

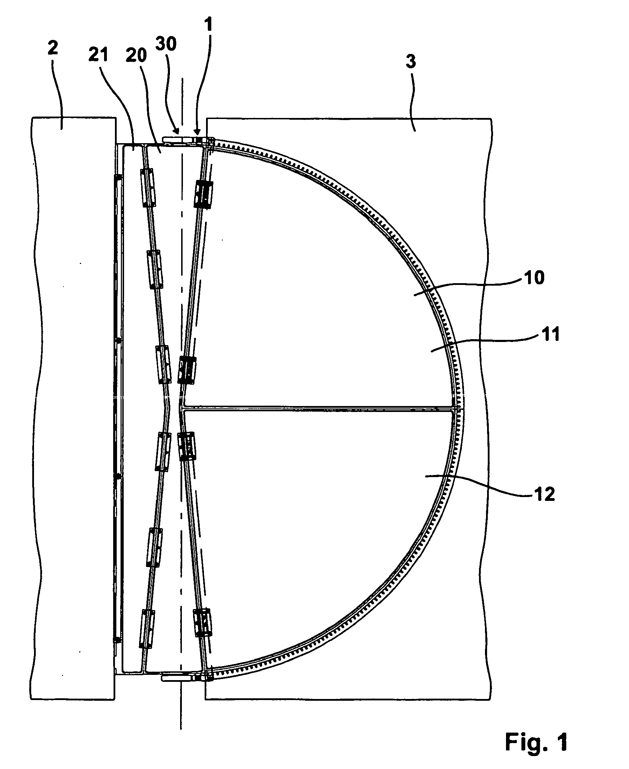

Gemäß Fig. 1 ist die Brücke als Teil des Übergangs insgesamt mit 1 bezeichnet. Die Brücke verbindet die beiden Fahrzeugteile 2 und 3, die lediglich schematisch angedeutet sind. Die Fahrzeugteile können die Fahrzeugteile eines Schienenfahrzeugs, z. B. einer Straßenbahn, oder auch die Fahrzeugteile eines Gelenkbusses sein. Die Brücke 1 umfasst die Drehscheibe 10 und die mit 20 bezeichnete Kuppelplatte. Die Kuppelplatte 20 ist über eine weitere Platte 21 an dem Boden des Fahrzeugteils 2 angeordnet, ohne dass dies näher beschrieben ist.

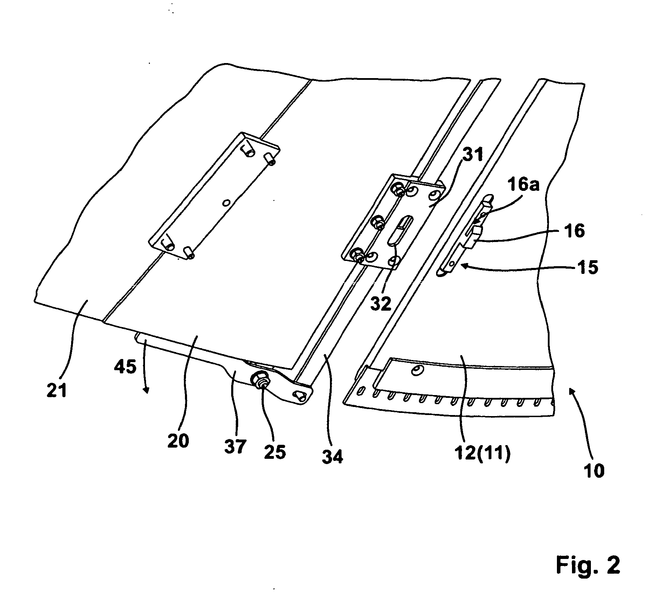

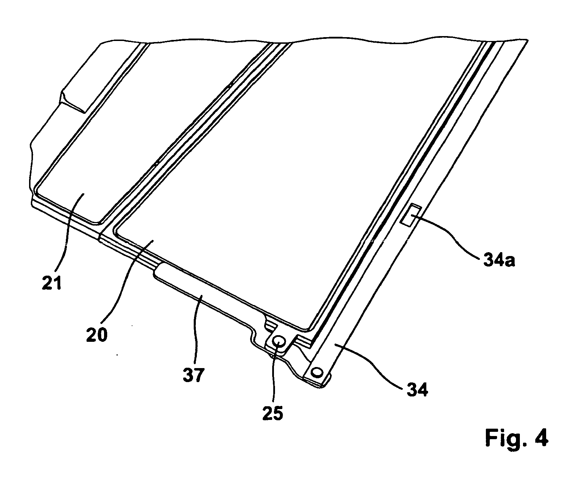

Gegenstand der Erfindung ist die Verriegelung zwischen der Drehscheibe 10 einerseits und der Kuppelplatte 20 andererseits. Die Drehscheibe 10 weist zwei Drehscheibenteilelemente 11 und 12 auf, die jeweils nahezu als Viertelkreis ausgebildet sind. Jedes Drehscheibenteilelement 11, 12 ist durch eine gesonderte Riegeleinrichtung 30 mit der Kuppelplatte 20 lösbar verbindbar. Die Ausbildung der Riegeleinrichtung ergibt sich insbesondere in Anschauung der Fig. 2 bis 4. Auf der Unterseite der Kuppelplatte 20 ist der mit 31 bezeichnete Schlosskasten angeordnet. In dem Schlosskasten 31 befindet sich auf der Unterseite ein Langloch 32, wobei im Bereich des Langloches durch den Schlosskasten 31 die Riegelstange 34 geführt ist, die ein als Langloch ausgebildetes Fenster 34a zeigt.

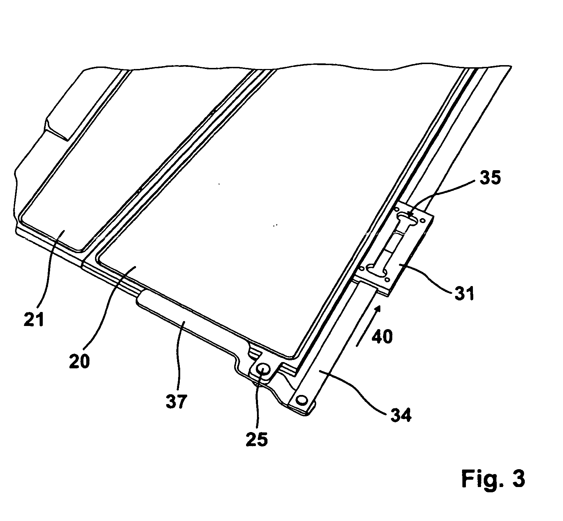

Im Bereich des Schlosskastens 31 besitzt das Drehscheibenteilelement 12 das mit einem hakenförmigen Ansatz 16 versehene Riegelglied 15. Betrachtet man nunmehr die Fig. 3, auf der die Kuppelplatte 20 in einer Ansicht von oben dargestellt ist, so ist erkennbar, dass der Schlosskasten 31 auf seiner Oberseite das Langloch 35 aufweist, das größer ist als das Langloch 32 auf der Unterseite des Schlosskastens 31, wobei die beiden Langlöcher miteinander in Verbindung stehen. Die Länge des Langloches 35 korrespondiert zu der Länge des Riegelgliedes 15 mit dem dort angeordneten hakenförmigen Ansatz 16. Das Drehscheibenteilelement 12 (11) der Drehscheibe 10 wird nun mit dem Riegelglied 15 auf den Schlosskasten 31 aufgelegt, sodass das Riegelglied 15 von dem Langloch 35 aufgenommen ist. Die Riegelstange 34 befindet sich hierbei in einer Position in dem Schlosskasten 31 derart, dass der hakenförmige Ansatz 16 des Riegelgliedes 15 so weit in den Schlosskasten 31 hineinragt, dass die Riegelstange 34 mit dem Fenster 34a bei Verschieben in Richtung des Pfeiles 40 in die Ausnehmung 16a des hakenförmigen Ansatzes einlaufen kann. Die Verschiebung der Riegelstange entlang des Pfeiles 40 erfolgt durch den an der Riegelstange schwenkbeweglich angeordneten Hebel 37. Der Hebel 37 ist um die Achse 25, die an der Kuppelplatte 20 angelenkt ist, verschwenkbar gelagert. Bei Verschwenkung des Hebels 37 in Richtung des Pfeiles 45 erfolgt die Verschiebung der Riegelstange 34 in Richtung des Pfeiles 40.

### Bezugszeichenliste:

| | |
|---|---|
| 1 | Übergang |
| 2, 3 | Fahrzeugteile |
| 10 | Drehscheibe |
| 11, 12 | Drehscheibenteilelemente |
| 15 | Riegelglied |
| 16 | hakenförmiger Ansatz |
| 16a | Ausnehmung |
| 20 | Kuppelplatte |
| 21 | Platte |
| 25 | Achse für Hebel |
| 30 | Riegeleinrichtung |
| 31 | Schlosskasten |
| 32 | Langloch (Unterseite) |
| 34 | Riegelstange |
| 34a | Fenster |
| 35 | Langloch (Oberseite) |
| 37 | Hebel |
| 40 | Pfeil |
| 45 | Pfeil |

## Patentansprüche

1. Drehscheibe eines Übergangs zwischen zwei gelenkig miteinander verbundenen Fahrzeugteilen, wobei die Drehscheibe zu beiden Enden mit dem Boden des jeweiligen Fahrzeugteils in Verbindung steht, wobei mindestens ein Teil der Drehscheibe (10) lösbar mit dem Boden eines Fahrzeugteils (2, 3) verbunden ist,
**dadurch gekennzeichnet,**
**dass** zur lösbaren Verbindung eine Riegeleinrichtung (30) vorgesehen ist.

2. Drehscheibe nach Anspruch 1,
**dadurch gekennzeichnet,**
**dass** die Drehscheibe (10) in der Draufsicht in etwa halbkreisförmig ausgebildet ist.

3. Drehscheibe nach einem der voranstehenden Ansprüche,
**dadurch gekennzeichnet,**
**dass** die Drehscheibe (10) in mehrere, insbesondere zwei etwa gleich große Drehscheibenteilelemente (11, 12) unterteilt ist.

4. Drehscheibe nach einem der voranstehenden Ansprüche,
**dadurch gekennzeichnet,**
**dass** die Riegeleinrichtung (30) einen verschieblich gehaltenen Schubriegel (34) umfasst, wobei der Schubriegel (34) in Eingriff mit einem Riegelglied (15) der Riegeleinrichtung (30, 15) bringbar ist.

5. Drehscheibe nach Anspruch 4
**dadurch gekennzeichnet,**
**dass** das Riegelglied (15) auf der Unterseite der Drehscheibe (10) angeordnet ist und der Schubriegel (34) an der Unterseite des Bodens des Fahrzeugteils (2, 3).

6. Drehscheibe nach Anspruch 4
**dadurch gekennzeichnet,**
**dass** der Schubriegel (34) in einem Schlosskasten (31) geführt ist, wobei der Schlosskasten (31) das Riegelglied (15) aufnimmt.

7. Drehscheibe nach Anspruch 6
**dadurch gekennzeichnet,**
**dass** der Schlosskasten (31) an der Unterseite des Bodens angeordnet ist.

8. Drehscheibe nach Anspruch 6
**dadurch gekennzeichnet,**
**dass** das Riegelglied (15) einen hakenförmigen Ansatz (16) aufweist, der in dem Schlosskasten (31) in Eingriff mit dem Schubriegel (34) bringbar ist.

9. Drehscheibe nach Anspruch 4
**dadurch gekennzeichnet,**
**dass** der Schubriegel (34) auf seiner Länge mindestens ein als Langloch ausgebildetes Fenster (34a) aufweist.

10. Drehscheibe nach Anspruch 4
**dadurch gekennzeichnet,**
**dass** an dem Schubriegel (34) endseitig ein Hebel (37) angeordnet ist, der an der seitlichen Stirnseite des Bodens verschwenkbar gelagert ist.

11. Drehscheibe nach Anspruch 7,
**dadurch gekennzeichnet,**
**dass** der auf der Unterseite des Bodens angeordnete Schlosskasten (31) mit seiner Oberseite im Wesentlichen bündig zu der Unterseite des Bodens verläuft, sodass bei aufliegender Drehscheibe (10) zwischen Boden und Drehscheibe (10) ein im Wesentlichen stufenloser Übergang bereitgestellt ist.

12. Drehscheibe nach Anspruch 9
**dadurch gekennzeichnet,**
**dass** der Schiosskasten (31) korrespondierend zu dem Fenster (34a) in dem Schubriegel (34) ein Langloch (35) zum Durchtritt des Riegelgliedes (15) aufweist.

13. Drehscheibe nach Anspruch 4
**dadurch gekennzeichnet,**
**dass** der Schubriegel (34) als Riegelstange ausgebildet ist.

14. Drehscheibe nach einem der voranstehenden Ansprüche,
**dadurch gekennzeichnet,**
**dass** die Drehscheibe (10) auf einer Seite durch mindestens eine Kuppelplatte (20) mit dem Boden des Fahrzeugteils (2, 3) in Verbindung steht.

15. Drehscheibe nach Anspruch 14,
**dadurch gekennzeichnet,**
**dass** die Kuppelplatte (20) im Bereich ihrer der Drehscheibe (10) zugewandten Stirnseiten auf der Unterseite den mindestens einen Schlosskasten (31) aufweist, wobei die Kuppelplatte (20), die mindestens eine Riegelstange (34) aufweist, die in dem mindestens einen Schlosskasten (31) verschieblich geführt ist, wobei die Riegelstange (34) ein Fenster (34a) und der Schlosskasten (31) mindestens ein durchgehendes Langloch (32, 35) aufweist, wobei das Fenster (34a) mit dem Langloch (32, 35) im Wesentlichen zur Deckung bringbar ist, wobei die Drehscheibe (10) auf ihrer Unterseite das Riegelglied (15) mit dem hakenförmigen Ansatz (16) aufweist, wobei die Riegelstange (34) im Bereich des Fensters (34a) in Eingriff mit dem hakenförmigen Ansatz (16) des Riegelgliedes (34) bringbar ist, und auf diese Weise die Drehscheibe (10) oder zumindest ein Teil der Drehscheibe (10) mit ihrem einen Ende durch den Schlosskasten (34) an der Kuppelplatte (20) fixierbar ist.

## Claims

1. A rotating platform of a gangway between two vehicles parts articulately connected to each other, wherein the rotation platform is connected at both ends to the floor of the respective vehicle part, wherein at least a part of the rotating platform (10) is detachably connected to the floor of the vehicle part (2, 3),
**characterized in that**
a locking device (30) is provided for a detachable connection.

2. The rotating platform according to claim 1,
**characterized in that**
in a view from above, the rotating platform (10) has an approximately semicircular shape.

3. The rotating platform according to one of the afore-mentioned claims,
**characterized in that**
the rotating platform (10) is divided into several, more specifically two rotating platform subelements (11, 12) of approximately equal size.

4. The rotating platform according to one of the afore-mentioned claims,
**characterized in that**
the locking device (30) comprises a slidably mounted slide bolt (34), wherein the slide bolt (34) is engageable with a bolt member (15) of the locking device (30, 15).

5. The rotating platform according to claim 4,
**characterized in that**
the bolt member (15) is disposed on the underside of the rotating platform (10) and the slide bolt (35) on the underside of the floor of the vehicle part (2, 3).

6. The rotating platform according to claim 4,
**characterized in that**
the slide bolt (34) is guided in a lock case (31), wherein the lock case (31) receives the bolt member (15).

7. The rotating platform according to claim 6,
**characterized in that**
the lock case (31) is disposed on the underside of the floor.

8. The rotating platform according to claim 6,
**characterized in that**
the bolt member (15) has a hook-shaped appendage (16) that is engageable in the lock case (31) with the slide bolt (34).

9. The rotating platform according to claim 4,
**characterized in that**
along its length the slide bolt (24) has at least one window (34a) configured as a slot hole.

10. The rotating platform according to claim 4,
**characterized in that**
a lever (37), which is pivotably mounted on the lateral front side of the floor, is disposed at one end of the slide bolt (34).

11. The rotating platform according to claim 7,
**characterized in that**
the lock case (31) disposed on the underside of the floor extends with its upper side substantially flush with the underside of the floor, so that when the rotating platform (10) rests on it a substantially continuous transition between the floor and the rotating platform (10) is provided.

12. The rotating platform according to claim 9,
**characterized in that**
the lock case (31) has a slot hole (35) which corresponds to the window (34a) in the slide bolt (34) for the passage of the bolt member (15).

13. The rotating platform according to claim 4,
**characterized in that**
the slide bolt (34) is configured as a lock bar.

14. The rotating platform according to one of the afore-mentioned claims,
**characterized in that**
on one side, the rotating platform (10) is connected to the floor of the vehicle part (2, 3) by at least one coupling plate (20).

15. The rotating platform according to claim 14,
**characterized in that**
the coupling plate (20) has the at least one lock case (31) on the underside in the area of its front side facing the rotating platform (10), wherein the coupling plate (20) has the at least one bolt bar (34), which is slidably guided in the at least one lock case (31), wherein the lock bar (34) has a window (34a) and the lock case (31) has at least one continuous slot hole (32, 35), wherein the window (34a) and the slot hole (32, 35) are adapted to be brought to cover each other, wherein the rotating platform (10) has the bolt member (15) with the hook-shaped appendage (16) on its underside, wherein the bolt bar (34) is engageable with the hook-shaped appendage (16) of the bolt member (15) in the area of the window (34a) and the rotating platform (10) or at least part of the rotating platform (10) is thus attachable with its one end to the coupling plate (20) by way of the lock case (34).

## Revendications

1. Plateforme rotative d'un passage entre deux parties de véhicules couplés de façon articulée, la plateforme rotative étant en liaison par ses deux extrémités avec les planchers respectifs des deux parties de véhicules, au moins une partie de la plateforme rotative (10) étant liée de façon amovible au plancher d'une des parties de véhicules (2, 3),
**caractérisée en ce que**
la liaison amovible comporte un équipement de verrouillage (30).

2. Plateforme rotative selon la revendication 1,
**caractérisée en ce que**
la plateforme rotative (10) a une forme, en vue de dessus, sensiblement semi-circulaire.

3. Plateforme rotative selon l'une des revendications précédentes,
**caractérisée en ce que**
la plateforme rotative (10) se décompose en plusieurs, en particulier en deux éléments de plateforme rotative (11, 12) ayant sensiblement la même grandeur.

4. Plateforme rotative selon l'une des revendications précédentes,
**caractérisée en ce que**
l'équipement de verrouillage (30), comprend un verrou poussoir (34) maintenu en coulissement, le verrou poussoir (34) étant agencé pour coopérer avec un organe de verrouillage (15) pour assurer la fonction de l'équipement de verrouillage (30, 15).

5. Plateforme rotative selon la revendication 4,
**caractérisée en ce que**
l'organe de verrouillage (15) est monté sur la face inférieure de la plateforme rotative (10) et le verrou poussoir (34) est monté sur la face inférieure du plancher de la partie de véhicules (2, 3).

6. Plateforme rotative selon la revendication 4,
**caractérisée en ce que**
le verrou poussoir (34) est guidé dans une boîte de serrure (31), la boîte de serrure (31) contenant l'organe de verrouillage (15).

7. Plateforme rotative selon la revendication 6,
**caractérisée en ce que**
la boîte de serrure (31) est montée sur la face inférieure du plancher.

8. Plateforme rotative selon la revendication 6,
**caractérisée en ce que**
l'organe de verrouillage (15) présente une projection en forme de crochet (16) qui peut entrer en prise avec le verrou poussoir (34) dans la boîte de serrure (31).

9. Plateforme rotative selon la revendication 4,
**caractérisée en ce que**
le verrou poussoir (34) comporte sur sa longueur, au moins une fenêtre (34a) sous forme d'ouverture oblongue.

10. Plateforme rotative selon la revendication 4,
**caractérisée en ce que**
le verrou poussoir (34) comporte à son extrémité un levier (37) qui est monté pivotant sur la face frontale latérale du plancher.

11. Plateforme rotative selon la revendication 7,
**caractérisée en ce que**
la boîte de serrure (31) montée sur la face inférieure du plancher est à fleur par sa face supérieure avec la face inférieure du plancher, de telle manière que, lorsque la plateforme rotative (10) est en appui, elle constitue un passage ne présentant aucune discontinuité entre le plancher et la plateforme rotative (10).

12. Plateforme rotative selon la revendication 9,
**caractérisée en ce que**
la boîte de serrure (31) comporte une ouverture oblongue (35) qui correspond à la fenêtre (34a) ménagée dans le verrou poussoir (34), pour le passage de l'organe de verrouillage (15).

13. Plateforme rotative selon la revendication 4,
**caractérisée en ce que**
le verrou poussoir (34) a une forme de barre de verrouillage.

14. Plateforme rotative selon l'une des revendications précédentes,
**caractérisée en ce que**
la plateforme rotative (10) est en liaison avec le plancher de la partie de véhicule (2, 3) au moyen d'au moins une plaque de couplage (20).

15. Plateforme rotative selon la revendication 14,
**caractérisée en ce que**
la plaque de couplage (20) comporte dans le secteur de sa face frontale orientée vers la plateforme rotative (10), sur son coté inférieur, ladite au moins une boîte de serrure (31), la plaque de couplage (20), qui comporte au moins une barre de verrouillage (34) guidée en coulissement dans ladite au moins une boîte de serrure (31), la barre de verrouillage (34) comportant une fenêtre (34a) et la boîte de serrure (31) comportant une ouverture oblongue traversante (32, 35), la fenêtre (34a) pouvant être amenée en recouvrement de l'ouverture oblongue (32, 35), la plateforme rotative (10) présentant sur sa face inférieure, l'organe de verrouillage (15) avec la projection (16) en forme de crochet, la tige de verrouillage (34) étant agencée pour entrer en prise avec la projection (16) en forme de crochet de l'organe de verrouillage (34) dans le secteur de la fenêtre (34a), et, la plateforme rotative (10) ou au moins une partie de la plateforme rotative (10), étant, de cette manière, fixée, par une extrémité, à la plaque de couplage (20) au moyen de la boîte de serrure (34).
